# EUROPEAN PATENT SPECIFICATION

(11) **EP 1 472 815 B1**
(45) Date of publication and mention of the grant of the patent: **07.06.2006**
(21) Application number: 02788318.0
(22) Date of filing: 09.12.2002
(51) Int. Cl.: H04L 9/32

(54) **GENERATION OF A WATERMARK BEING UNIQUE TO A RECEIVER OF A MULTICAST TRANSMISSION OF MULTIMEDIA**
ERZEUGEN EINES WASSERZEICHENS, DAS EINMALIG FÜR EINEN EMPFÄNGER EINER MEHRFACHSENDUNG VON MULTIMEDIADATEN IST
GENERATION D'UN FILIGRANE ASSOCIE DE MANIERE UNIQUE A UN RECEPTEUR D'UNE TRANSMISSION A MULTI-DIFFUSION DE MULTIMEDIA

(30) Priority: 11.01.2002 EP 02075093
(43) Date of publication of application: 03.11.2004
(73) Proprietor: Koninklijke Philips Electronics N.V., 5621 BA Eindhoven (NL)
(72) Inventor: VAN DER VEEN, Michiel, NL-5656 AA Eindhoven (NL)
(74) Representative: Groenendaal, Antonius W. M.
(86) International application number: PCT/IB2002/005273
(87) International publication number: WO 2003/058876

(56) References cited:
- WO-A-01/45410
- US-A- 6 141 753
- US-A1- 2001 004 736
- US-A1- 2001 012 377
- US-A1- 2001 032 313
- R. PARVIAINEN, P. PARNES: "LARGE SCALE DISTRIBUTED WATERMARKING OF MULTICAST MEDIA THROUGH ENCRYPTION" DEPARTMENT OF COMPUTER SCIENCE/CENTRE FOR DISTANCE-SPANNING TECHNOLOGY, 2001, XP002239136 Sweden
- JIAN ZHAO: "Applying Digital Watermarking Techniques to Online Multimedia Commerce" PROCEEDINGS OF THE INTERNATIONAL CONFERENCE ON IMAGING SCIENCE, SYSTEMS AND APPLICATIONS, XX, XX, 30 June 1997 (1997-06-30) - 3 July 1997 (1997-07-03), XP002221738 USA
- HAITSMA J ET AL: "AUDIO WATERMARKING FOR MONITORING AND COPY PROTECTION" 2000 , PROCEEDINGS ACM MULTIMEDIA 2000 WORKSHOPS. MARINA DEL REY, CA, NOV. 4, 2000, ACM INTERNATIONAL MULTIMEDIA CONFERENCE, NEW YORK, NY: ACM, US, VOL. CONF. 8, PAGE(S) 119-122 , NETHERLANDS XP001003707 ISBN: 1-58113-311-1 hole document

## Description

### FIELD OF THE INVENTION

The present invention is related to the field of transmission of multimedia to multiple receivers, and more particularly to a method and apparatus for the generation of watermarks being unique to a receiver of a multicast transmission of such media. As used herein, the term "multimedia" can be any type of media such as video, sound etc, typically distributed in the form of a stream of data packets.

### BACKGROUND

Multicast transmissions provides efficient one-to-many or many-to-many transmission of multimedia in a distribution network, typically in an Internet environment. A source transmits multimedia in the form of packet data to a group of receivers typically identified by a single IP destination address. Multicast transmissions are well suited for large scale transmissions of multi-media because of scalability; each network link in the distribution network has to transport only one copy of each data packet regardless of the number of receivers.

Authentication and confidentiality can be solved by means of encryption of the data; however, there is still a problem with receivers that retransmit unencrypted data to other receivers. Basic encryption is not sufficient to protect information. One way to detect whom the illegal copy originated from is fingerprinting, i. e embedding unique information, typically a watermark, into each copy of the original data that identifies the receiver receiving the copy.

In unicast transmissions, the number of copies required is multiplied with the number of receivers, which of course implies drawbacks for large scale transmissions. However, it is easy to trace from whom an illegal copy originated, since slightly different copies can be transmitted to each receiver.

In "Large Scale Distributed Watermarking of multicast media through encryption", Parvianninen Roland, Parnes Peter, Department of Computer Science/Centre for Distance Spanning Technology, 2001, it is disclosed a method in which each receiver of a multicast session receives a stream of data having a different unique watermark, while still retaining the scalability of a multicast transmission. The watermarked streams can be used to trace receivers who make unauthorized copies of the stream. However, this document does not disclose how to provide additional information in the stream of data, which is required for instance to comply with digital right management rules (DRM). The implementation of additional information must fulfill a number of basic requirements such as not significantly affecting the perceptual quality of an image, a video sequence or a sound; it must also be robust to transformations and/or operations that can be applied to the image, video sequence or sound such as color transformation, geometric transformation, translation or rotation, data compression such as JPEG/MPEG, noise, D/A, A/D conversions, image smoothing etc.

US 2001/0012377 A1 describes a method where multi-bit auxiliary information is hidden in imagery such as digital photographs or video using steganographic techniques. Nothing is mentioned about protecting multicast multimedia and adding additional information.

JIAN ZHAO: "Applying Digital Watermarking Techniques to Online Multimedia Commerce" PROCEEDINGS OF THE INTERNATIONAL CONFERENCE ON IMAGING SCIENCE, SYSTEMS AND APPLICATIONS, XX, XX, 30 JUNE 1997 (1997-06-30), -3 July 1997 (1997-07-03) XP002221738 USA. This document describes a scheme to efficiently apply the digital watermarking technology to online service for multimedia data. Nothing is mentioned about the specific topic of protecting multicast multimedia and adding additional information.

WO 01/45410 describes a method and apparatus for watermarking digital data is described herein whereby the digital data is decomposed into a plurality of original data segments, one or more of the original data segments replicated at least once to generate replica data segments, a set of watermarks is generated, each watermark is applied to a respective data segment to generate watermarked data segments, the data segments are encrypted using encryption keys to generate encrypted data segments. Nothing is mentioned about the specific topic of protecting multicast multimedia adding and additional information.

US 2001/032313 A1 describes a method and an arrangement for embedding a watermark in an information signal, in particutar an audio signal. The method is based on modification of the magnitude (not the phase) of Fourier coefficients and docs not require the original signal for detection. Nothing is mentioned about the specific topic of protecting multicast multimedia and adding additional information.

### SUMMARY OF THE INVENTION

An object of the invention is to provide a method for the generation of watermarks being unique to a receiver of multicast transmission of multimedia, which also provide additional information, for instance to comply with DRM rules, without creating significant visible and/or audible artefacts in the media.

According to the present invention this is rcalizcd in a method of generating a watermark being unique to a receiver of a multi-cast transmission of multimedia data in the form of data packets, comprising a multimedia stream with a multi-bit capacity in a single layer for storing additional information. The principal advantage is that with one single layer of watermarks both global information such as copyright information and user specific information can be embedded with minimum signal degradation. In this way, embedding of multiple watermarks typically in multiple layers can be avoided. This is of importance, since embedding watermarks for instance by stacking them onto each other is a potential source for introduction of perceptible artefacts in the content of the media.

In non-multicast environments a different solution may be used by simply allocating a portion of the watermarks bits for the additional information and a portion of the bits for user specific information typically fingerprint information. However, since the invention finds application in multicast environments such a solution will not be further discussed in this document.

The present invention also provides apparatus and system for performing the method disclosed above.

In a first aspect of some preferred embodiments thereof, the invention provides an efficient method for combining fingerprint- and copyright watermarks by means of one single watermark algorithm in a multicast environment. In another aspect of the invention, also more watermarks may be deployed. For example, different data packets may be embedded with watermarks from different algorithms. This is still a single-layer watermark, but with different watermark algorithms.

In a second aspect of some preferred embodiments thereof, the invention provides a copy of each data packet to which a receiver has access determined by a sequence of random encryption keys which are sent prior to transmitting.

In a third aspect of some embodiments thereof, the invention provides more than two copies of each data packet.

There is provided, in accordance with a preferred embodiment of the invention, a method of generating a watermark being unique to a receiver of a multicast transmission of multimedia data in the form of data packets, said method comprising the following steps:
- transmitting from a source at least two different copies of each data packet having different watermarks, at least a first watermark and a second watermark, respectively,
- encrypting said copies differently, preferably by means of different encryption keys,
- providing each receiver access to only one of said two copies, thereby providing each receiver with an unique resulting data stream comprising data packets having first and second watermarks, wherein the order in which the first and second watermarks are present in the resulting stream provides the unique watermark,
- providing the data stream with a multi-bit capacity in a single layer for storing additional information.

Preferably, the additional information is global information such as copyright information, producer information and owner information.

Preferably, the source and the receivers are linked together by means of a distribution network such as the Internet.

In a fourth aspect of some preferred embodiments thereof, the invention provides source and receivers linked together by a distribution network based on radio, typically a mobile telephone network such as a GPRS-network, or 3-G network.

There is further provided, in accordance with a preferred embodiment of the invention, a source for transmitting multimedia data to receivers of a multi-cast transmission, said source comprising operational means further comprising or being connectable to transmitting and encryption means which together:
- read data packet i,
- create two watermarked copies V₀[i], V₁[i] of data packet i,
- get two encryption keys SK[2i-1] and SK[2i],
- encrypt the watermarked copies of data packet i C₀[i]=E(V₀[i], SK[2i-1] and C₁[i]=E(V₁[i], SK[2i]),
- transmit C₀[i] and C₁[i] together with i, where i=1, 2,...,k,
via a network to the receivers.

By means of this method, fingerprint- and global watermarks can be provided using one single watermark algorithm, or multiple watermarks algorithms may be used while still embedding a single-layer watermark.

In a fifth aspect of some preferred embodiments thereof, the invention provides the operational means, transmitting means and encryption means implemented as software.

There is further provided, in accordance with a preferred embodiment of the invention, a receiver for receiving multimedia data comprising receiving and decrypting means, which together:
- receive two packets: C₀[i] and C₁[i],
- get the decryption key for packet i: RKr[i],
- try to decrypt both packets with key RKr[i],
- receiving additional information, having been stored in a multi-bit capacity in a single layer of said data packets.
whereby only one packet will decrypt into a proper data packet: Vji[i]=D(Cj[i], RKr[i]), ji ε {0,1}
- decode and render Vji[i].

According to another preferred embodiment of the invention, the receiving means are arranged to receive more than two data packets and/or the decrypting means are arranged to decrypt more than two data packets.

There is further provided, in accordance with a preferred embodiment of the invention, a system comprising a source, receivers and an intervening distribution network for realizing a method of generating a watermark being unique to a receiver of a multicast transmission of multimedia data in the form of data packets, said method comprising the following steps:
- transmitting from a source at least two different copies of each data packet having different watermarks, at least a first watermark and a second watermark, respectively,
- encrypting said copies differently, preferably by means of different encryption keys,
- providing each receiver access to only one of said two copies, thereby providing each receiver with an unique resulting data stream comprising data packets having first and second watermarks, wherein the order in which the first and second watermarks are present in the resulting stream provides the unique watermark,
- providing the data stream with a multi-bit capacity in a single layer for storing additional information.

A fingerprinted media data stream may decrease illegal copying of the media content, since the origin or the buyer of the media stream can be identified. This can be the only option for pure software solutions where tamper resistant hardware is impossible to implement.

A principal aspect of the invention is to provide one single watermark that provides both identifiers for tracking and comprises additional information. This and other aspects of the invention will be apparent from and elucidated with reference to the embodiments(s) described hereinafter.

### BRIEF DESCRIPTION OF THE DRAWINGS

FIG. 1 is a schematic representation of a system according to a preferred embodiment of the invention.
FIG. 2 illustrates an example of a media stream of data packets transmitted from the source.
Fig. 3 illustrates an example of a fingerprinted media stream transmittable from a receiver of a multimedia multicast transmission.

### DESCRIPTION OF PREFERRED EMBODIMENTS

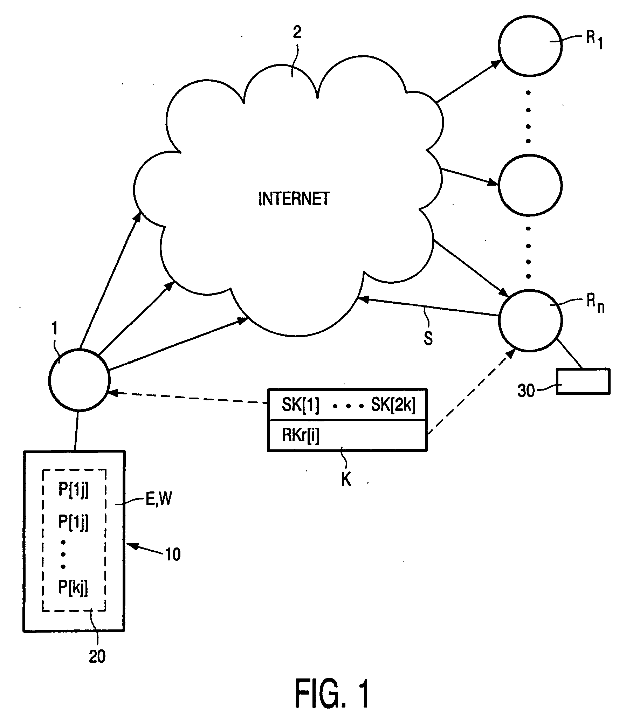

FIG. 1 shows a system for IP multicasting comprising a source 1, for instance a server, and receivers R₁, R₂,...Rₙ, for instance clients, of which only three are shown. The number of receivers are typically more than 100 000 in a typical Internet multicast environment but is by no means limited thereto. The source 1 and the receivers R₁, R₂,...Rₙ are linked together by means of a distribution network 2 such as the Internet. Other types of networks are of course also possible, but will not be further disclosed in conjunction to this embodiment.

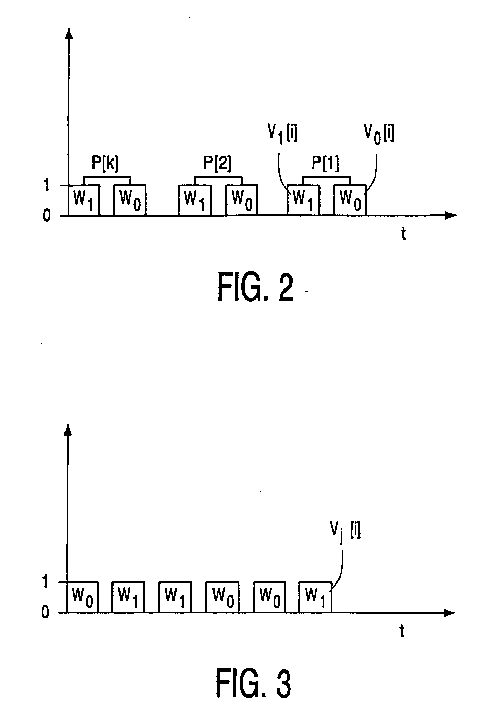

The source 1 has to access k data packets: P[1], P[2],...P[k] and an encryption algorithm E provided in operational means 10 further comprising or connectable to transmitting and encryption means 20 such that a cover object P=D(E(P, K), K). That is, E(P, K) encrypts the k:th data packet P[k] with an encryption/decryption key bank k and D(P, K) by means of decryption means 30 decrypts the cover object P. A watermarking algorithm W: P_{w}=W(P, w), w=U(P_{w}) and at least two different watermarks, a first watermark w₀ and a second watermark w₁ (illustrated in FIG. 2) are also required. The number of watermarks is not limited to two but can be any suitable number. However, herein only two watermarks are described because of simplicity. Furthermore, the watermarks do not have to be constant and according to a preferred embodiment of the invention, the watermarks can change with time as long as they are not identical, and the source keeps track of them.

The source 1 sends at least two different copies V₀[i], V₁[i] of each data packet P[1], P[2],...P[k], each having a different watermark w₀, w₁. Both copies V₀[i], V₁[i] of the data packets P[1], P[2],...P[k] are encrypted with two different, random encryption keys SK[1], SK[2],...,SK[2k]. The encrypted data packets are then sent to all receivers R₁, R₂,...Rₙ by means of multicast transmission via a distribution network 2, preferably in an Internet environment hereinafter called "IP multicast". Any given receiver R₁, R₂,...,Rₖ has access to only one of the encryption keys of one data packet.

The watermarking algorithm W embeds the watermark w in the cover object P, and an detection algorithm U extracts the watermark (w) from the marked object P. A detection algorithm that detects if the watermark (w) is still present can be used instead: U(Pw, w)=B, B ε{true, false}. The source needs 2k random encryption keys, SK[1], SK[2],...,SK[2k] to be able to transmit the data packets of the media stream. A receiver R₁, R₂,...Rₙ has access to k of these keys SK[1], SK[2],...,SK[2k]: either a receiver key RKᵣ is RKᵣ[i]=SK[2i-1] or RKᵣ[i]=SK[2i], i={1, 2,...,k}.

In Fig. 1, the transmission of encryption keys is not showed in detail. Different strategies may be deployed for this. For instance, keys may be transmitted via the Internet if a channel can be authenticated.

To transmit data packet k, according to a preferred embodiment of the invention, the source 1 performs the following method steps:
- read data packet i P[i],
- create two watermarked copies V₀[i], V₁[i] of data packet i,
- get two encryption keys SK[2i-1] and SK[2i],
- encrypt the watermarked copies V₀[i], V₁[i] of data packet i C₀[i]=E(V₀[i], SK[2i-1] and C₁[i]=E(V1[i], SK[2i]),
- add additional global information such as copyright using the data packets
- transmit C₀[i] and C₁[i] together with i.

FIG. 2 illustrates an example of a media stream of data packets transmitted from the source. A first packet P[1] and a k:th packet P[k] are shown to illustrate how each packet comprises two different encrypted packets V₀[i], V₁[i], which are provided with two different watermarks w₀ and w₁, respectively.

Now is again referred to FIG. 1.
At the receiver side, according to a preferred embodiment of the invention, each receiver R₁, R₂,...Rₖ receives both packets and tries to decrypt them in the following way by means of the method steps:
- receive two packets: C₀[i] and C₁[i],
- get the decryption key for packet i: RKr[i],
- try to decrypt both packets with the decryption key RKr[i],
- receive global information,
whereby only one packet will decrypt into a proper data packet: Vji[i]=D(Cj[i], RKr[i]), ji ε {0, 1},
- decode and render Vji[i].

For each data packet the receiver will be able to decode exactly one of the watermarked packets. Which of the two packets is decided by the keys the source has assigned to the receiver.

Fig. 3 illustrates an example of a fingerprinted media stream S transmittable from a receiver of a multimedia multicast transmission. The media streams comprise data packets having different watermarks. A stream from a first receiver R₁ does not correspond to a stream from another receiver. Therefore, each receiver will have his own fingerprinted resulting stream.

If the keys a receiver have access to is unique among all receivers and known by the source, a unique identity string for that user can be defined:
Idr=Br[1], Br[2],...Br[k], Br[i] v (0, 1).

The identity string can be derived by the source from both keys given to the receiver and the resulting stream from the receiver. From the keys the source sent to the receiver:
Br[i]=0 if RKr[i]=SK[2i-1]
Br[i]=1, if RKr[i]=SK[2i]

From the resulting stream for the user:
Br[i]=0, if U(Vji)=w₀
Br[i]=1, if U(Vji)=w₁
Br[i]=undefined, if neither C₀[i] nor C₁[i] was received or decrypted

If the receiver does not receive all packets, due to for example packet loss or that the receiver tuned in late, the identity strings will not match completely. If n is large enough, the partial identity string will be long enough to be unique among all receivers although some bits are undefined.

Since two copies have to be sent for each data packet, the bandwidth usage has to be doubled for the source and the receivers. Preferably, the bandwidth can be reduced by optimizations. Other demands arise of course, if more than two copies are sent, which is within the scope of the invention.

At any given time, only one of two watermarked packets is actually useful for a single receiver since the other packet cannot be decrypted. If two copies were sent on different multicast groups the receivers can hop between the groups by joining and leaving them as the group the correct packet is transmitted on changes. In this approach it is not only necessary to send the keys to each receiver but also which stream to receive; in such a case one extra bit for each key is required. Also this is within the scope of the invention, but will not be further disclosed, since unfortunately, the join/leave latency for IP multicast transmission is currently too large for this approach. Also, if more than one receiver is on the same network segment most saving is lost.

An alternative way of watermarking could be to watermark one (1) in every x packet, thus reducing the bandwidth requirement to (1+1/x) times the bandwidth of the original stream. Unfortunately, a malicious receiver could remove these watermarked packets and retransmit the resulting degraded stream if x is large. It is therefore necessary to be sure that the degradation is large enough to discourage removal of watermarked packets. One example of this is to only watermark to the I frames of an MPEG video stream or only watermark the last ten minutes of a movie. Also this is within the scope of the invention.

The receiver can be treated as long a term key distributed by out-of-band means when the users registers, either as a downloadable file, preferably protected by SSL/TLS or delivered to the user on a floppy or cdrom. All these solutions have problems when revocation of access is considered. The keys can also be continuously streamed to the users, which is within the scope of the invention.

The amount of keys that each receiver requires depends on the required security. The total size of the keys for one receiver is then keys*keysize. A cryptographic secure random number generator can also generate the bitmasks instead to further reduce storage needs at the source.

Preferably, the key is a 56 bit key, since an attacker has to break a sufficient amount of keys to get enough packets to create an unidentifiable watermarked stream. Any other suitable number of bits is of course evident for a person skilled in the art to use without departing from the invention. Preferably, the keys are generated prior to transmission by the source and stored in files.

It is assumed that it is not possible to either remove the watermark or break the encryption in a reasonable time. It is also assumed that the attacker cannot steal the non-watermarked stream from the source by breaking into the server. If the encryption algorithm is broken an attacker can choose the final watermarked stream and make traitor tracing impossible, but if the encryption algorithm is chosen with care and with large enough key size and the keys are generated properly this can be avoided. The problem of revoking access for a receiver is not considered; however this would require new keys to be transmitted.

If a large enough number of receivers collaborate, p, at least k/p of the original bits from one of the streams will always remain. This can be solved, but is not discussed in this document, since it is well described in prior art.

The invention can for instance be implemented in an existing Java application system for audio transmission over multicast using MPEG-1 audio compression standard. Preferably, "Blowfish" is chosen as encryption algorithm.

No active network elements are required or tamper-resistant smart-cards. The watermarks that make up the fingerprints are not fixed to a certain number of bits or restricted in format, but can be any format the watermarking algorithm requires for robustness. To avoid attacks it is also possible to increase the number of watermarks in one media stream.

As used in the following claims, the words "comprise" or "include" or their conjunctions means "including, but not necessarily limited to.

## Claims

1. A method of generating a watermark being unique to a receiver of a multi-cast transmission of multimedia data in the form of data packets, said method comprising the following steps:
- transmitting from a source (1) at least two different copies (V₀[i], V₁[i]) of each data packet (P[1], P[2],...,P[k]) having different watermarks, at least a first watermark (w₀) and a second watermark (w₁), respectively,
- encrypting said copies (V₀[i], V₁[i]) differently, preferably by means of different encryption keys SK[1], SK[2],...,SK[2k],
- providing each receiver (R₁, R₂,...,Rₙ) access to only one of said two encrypted copies, thereby providing each receiver (R₁, R₂,...,Rₙ) with an unique resulting data stream (S) comprising data packets having first and second watermarks (w₀, w₁), wherein the order in which the first and second watermarks (w₀, w₁) are present in the resulting stream (S) provides the unique watermark,
**characterized in that**
the mothod further comprises the step of providing the data stream (S) with a multi-bit capacity in a single layer for storing additional information.

2. A method according to claim 1, wherein the additional information is global information.

3. A method according to claim 2, wherein the additional information is at least one of copyright information, producer information, and owner information.

4. A method according to claim 1, wherein source (1) and the receivers (R₁, R₂,...,Rₙ) are linked together by means of a distribution network (2) such as the Internet.

5. A method according to claim 1, wherein the copy (V₀[i], V₁[i]) to which a receiver (1) has access is determined by a sequence of random encryption keys (SK[1], SK[2],...,SK[2k]) which are sent prior to transmitting.

6. A method according to claim 5, wherein the keys (SK[1], SK[2],...,SK[2k]) are generated prior to transmission by the source (1) and stored in files.

7. A method according to claim 1, wherein the watermarks that are generated change with time as long as they are not identical, and the source keeps track of them.

8. A method according to claim 1, wherein the watermarks that are generated are more than two.

9. A method according to claim 1, wherein also an identity string derived by the source from both keys given to the receiver and the resulting stream is generated.

10. A method according to claim 1, wherein bandwidth usage is reduced by optimizations, for instance by not watermarking all packets, for instance by watermarking last ten minutes of a movie.

11. A source (1) for transmitting multimedia data to receivers (R₁, R₂,...,Rₙ) of a multicast transmission, said source comprising operational means (10) further comprising transmitting and encryption means (20) which comprise processing means for:
- reading data packet i P[i],
- creating at least two watermarked copies V₀[i], V₁[i] of data packet i,
- getting two encryption keys SK[2i-1] and SK[2i],
- encrypting the watermarked copies V₀[i], V₁[i] of data packet i C₀[i]=E(V₀[i], SK[2i-1] and C₁[i]=E(V1[i], SK[2i]),
- transmitting C₀[i] and C₁[i] together with i, where i=1, 2,...,k,
via a network to the receivers (R₁, R₂,...Rₙ),
**characterized in that**
said transmitting and encryption means (20) further comprise processing means for providing the data packets with a multi-bit capacity in a single layer for storing additional information.

12. A source according to claim 11, wherein the operational means (10), transmitting means and encryption means (20) are implemented as software.

13. A receiver for receiving multimedia data comprising receiving and decrypting means (30), which comrises processing means for:
- receiving at least two data packets: C₀[i] and C₁[i],
- getting the decryption key for data packet i: RKr[i],
- trying to decrypt both data packets with key RKr[i],
- eceiving additional information, having been stored in a multi-bit capacity in a single layer of said data packets,
whereby only one data packet will decrypt into a proper data packet: Vji[i]=D(Cj[i], RKr[i]), ji ε {0, 1},
- decoding and rendering Vji[i].

14. A system comprising a source (1), receivers (R₁, R₂,...,Rₙ) and an intervening distribution network (2) for realizing a method of generating a watermark being unique to a receiver (R₁, R₂,...,Rₙ) of a multicast transmission of multimedia data in the form of data packets, said system comprises processing means for:
- transmitting from a source (1) at least two different copies (V₀[i], V₁[i]) of each data packet (P[1], P[2],...,P[k]) having different watermarks, a first watermark (w₀) and a second watermark (w₁), respectively,
- encrypting said copies differently, preferably by means of different encryption keys SK[1], SK[2],...,SK[2k],
- providing each receiver (R₁, R₂,...,Rₙ) access to only one of said two copies (V₀[i], V₁[i]), thereby providing each receiver with an unique resulting data stream (S) comprising data packets having first and second watermarks, wherein the order in which the first and second watermarks (w₀, w₁) are present in the resulting stream (S) provides the unique watermark,
**characterized in that**
said system further comprises processing means for providing the data stream (S) with a multi-bit capacity in a single layer for storing additional information.

15. A system according to claim 14, wherein the source is a server and the receivers are clients.

## Patentansprüche

1. Verfahren zum Erzeugen eines Wasserzeichens, das für einen Empfänger einer Mehrfachübertragung von Multimediadaten in Form von Datenpaketen einzigartig ist, wobei das genannte Verfahren die nachfolgenden Verfahrensschritte umfasst:
- das von einer Quelle (1) aus Übertragen von wenigstens zwei verschiedenen Kopien (V₀[i], V₁[i]) von jedem Datenpaket (P[1], P[2],...P[k]) mit verschiedenen Wasserzeichen, und zwar mit wenigstens einem ersten Wasserzeichen (w₀) bzw. einem zweiten Wasserzeichen (w₁),
- das unterschiedlich Verschlüsseln der genannten Kopien (V₀[i], V₁[i]), vorzugsweise mit Hilfe verschiedener Verschlüsselungsschlüssel SK[1], SK[2],....,SK[2k],
- das Bieten der Möglichkeit, dass jeder Empfänger (R₁, R₂,....Rₙ) auf nur eine der genannten zwei verschlüsselten Kopien zugreifen kann, wodurch jedem Empfänger (R₁, R₂,....Rₙ) mit einem einzigartigen resultierenden Datenstrom (S) versehen wird, der Datenpakete aufweist, die ein erstes und ein zweites Wasserzeichen (w₀, w₁) haben, wobei die Reihenfolge, in der das erste und das zweite Wasserzeichen (w₀, w₁) in dem resultierenden Strom (S) das einzigartige Wasserzeichen liefert,
**dadurch gekennzeichnet, dass** das Verfahren den Schritt aufweist, wobei der Datenstrom (S) mit einer Multibitkapazität in einer einzigen Schicht zur Speicherung zusätzlicher Information versehen wird.

2. Verfahren nach Anspruch 1, wobei die zusätzliche Information allgemeine Information ist.

3. Verfahren nach Anspruch 2, wobei die zusätzliche Information wenigstens Copyright-Information, Producer-Information oder Inhaberinformation ist.

4. Verfahren nach Anspruch 1, wobei die Quelle (1) und die Empfänger (R₁, R₂,....,Rₙ) mit Hilfe eines Verteilungsnetzwerkes (2), wie das Internet, miteinander gekoppelt sind.

5. Verfahren nach Anspruch 1, wobei die Kopie (V₀[i], V₁[i]), auf die ein Empfänger (1) Zugriff hat, durch eine Folge beliebiger Verschlüsselungsschlüssel (SK[1], SK[2],....,SK[2k]), die vor der Übertragung gesendet werden, bestimmt wird.

6. Verfahren nach Anspruch 5, wobei die Schlüssel (SK[1], SK[2],....,SK[2k]) vor der Übertragung durch die Quelle (1) erzeugt und in Dateien gespeichert werden.

7. Verfahren nach Anspruch 1, wobei die Wasserzeichen, die erzeugt werden, solange sie nicht identisch sind mit der Zeit ändern, wobei die Quelle ihnen nachgeht.

8. Verfahren nach Anspruch 1, wobei die Wasserzeichen, die erzeugt werden, mehr als zwei sind.

9. Verfahren nach Anspruch 1, wobei auch eine von der Quelle gelieferte Identitätsreihe aus den Schlüsseln, die dem Empfänger gegeben werden und dem resultierenden Strom erzeugt wird.

10. Verfahren nach Anspruch 1, wobei die Bandbreitenverwendung durch Optimierung reduziert wird, beispielsweise **dadurch**, dass nicht alle Pakete mit einem Wasserzeichen versehen werden, sondern dass nur die letzten zehn Minuten eines Films mit einem Wasserzeichen versehen werden.

11. Quelle (1) zum Übertragen von Multimediadaten zu Empfängern (R₁, R₂,....Rₙ) einer Mehrfachsendung, wobei die genannte Quelle Operationsmittel (10) aufweist, die weiterhin Übertragungs- und Verschlüsselungsmittel (20) aufweisen, die Verarbeitungsmittel aufweisen um:
- das Datenpaket 1 P[i] auszulesen,
- wenigstens zwei mit einem Wasserzeichen versehene Kopien V₀[i], V₁[i] des Datenpakets i zu schaffen,
- zwei Verschlüsselungsschlüssel SK[2i-1],....,SK[2i] zu erhalten,
- die mit einem Wasserzeichen versehenen Kopien V₀[i], V₁[i] des Datenpakets i C₀[i]=E(V₀[i], SK[2i-1] und C₁[i]=E(V1[i], SK[2i], zu verschlüsseln,
- C₀[i] und C₁[i]zusammen mit i zu übertragen, wobei i=1, 2, ..., k ist, und zwar über ein Netzwerk zu den Empfängern (R₁, R₂,...,Rₙ),
**dadurch gekennzeichnet, dass**
die genannten Übertragungs- und Verschlüsselungsmittel (20) weiterhin Verarbeitungsmittel aufweisen um die Datenpakete mit einer Multibitkapazität in einer Einzelschicht zu versehen, und zwar zur Speicherung zusätzlicher Information.

12. Quelle nach Anspruch 11, wobei die Operationsmittel (10), die Übertragungsmittel und die Verschlüsselungsmittel (20) als Software implementiert worden sind.

13. Empfänger zum Empfangen von Multimediadaten mit Empfangs- und Entschlüsselungsmitteln (30), die Verarbeitungsmittel aufweisen um:
- wenigstens zwei Datenpakete C₀[i] und C₁[i] zu empfangen,
- den Entschlüsselungsschlüssel für das Datenpaket i: RKr[i] zu erhalten,
- zu versuchen, die beiden Datenpakete mit dem Schlüssel: RKr[i] zu entschlüsseln,
- zusätzliche Information zu empfangen, die in einer Mehrbitkapazität in einer Einzelschicht der genannten Datenpakete gespeichert ist,
wobei nur ein einziges Datenpaket in ein richtiges Datenpaket:
Vji[i]=D(Cj[i], RKr[i], ji ε {0,1} entschlüsselt wird,
- Vji[i] zu decodieren und aufzubereiten.

14. System mit einer Quelle (1), Empfängern (R₁, R₂,....,Rₙ) und mit einem dazwischen liegenden Verteilungsnetzwerk (2) zum verwirklichen eines Verfahrens zum Erzeugen eines Wasserzeichens, das für einen Empfänger (R₁, R₂,....,Rₙ) einer Mehrfachsendung von Multimediadaten in Form von Datenpaketen einzigartig ist, wobei das genannte System Verarbeitungsmittel aufweist um:
- von einer Quelle (1) aus wenigstens zwei verschiedenen Kopien (V₀[i], V₁[i]) von jedem Datenpaket (P[1], P[2],...P[k]) mit verschiedenen Wasserzeichen, und zwar mit wenigstens einem ersten Wasserzeichen (w₀) bzw. einem zweiten Wasserzeichen (w₁) zu übertragen,
- die genannten Kopien (V₀[i], V₁[i]), vorzugsweise mit Hilfe verschiedener Verschlüsselungsschlüssel SK[1], SK[2],....,SK[2k] zu verschlüsseln,
- die Möglichkeit zu bieten, dass jeder Empfänger (R₁, R₂,....Rₙ) auf nur eine der genannten zwei verschlüsselten Kopien (V₀[i], V₁[i])zugreifen kann, wodurch jedem Empfänger (R₁, R₂,....Rₙ) mit einem einzigartigen resultierenden Datenstrom (S) versehen wird, der Datenpakete aufweist, die ein erstes und ein zweites Wasserzeichen (w₀, w₁) haben, wobei die Reihenfolge, in der das erste und das zweite Wasserzeichen in dem resultierenden Strom (S) das einzigartige Wasserzeichen liefert,
**dadurch gekennzeichnet, dass** das System weiterhin Verarbeitungsmittel aufweist, mit deren Hilfe der Datenstrom (S) mit einer Multibitkapazität in einer einzigen Schicht zur Speicherung zusätzlicher Information versehen wird.

15. System nach Anspruch 14, wobei die Quelle ein Server ist und die Empfänger Kunden sind.

## Revendications

1. Procédé de génération d'un filigrane unique pour un récepteur d'une transmission à multi-diffusion de données multimédia sous la forme de paquets de données, ledit procédé comprenant les étapes suivantes :
- la transmission à partir d'une source (1) d'au moins deux copies différentes (V₀[i], V₁[i]) de chaque paquet de données (P[1], P[2], ..., P[k]) ayant différents filigranes, au moins un premier filigrane (w₀) et un deuxième filigrane (w₁), respectivement,
- le chiffrement desdites copies (V₀[i], V₁[i]) différemment, de préférence au moyen de différents codes de chiffrement SK[1], SK[2], ... SK[2k],
- la fourniture à chaque récepteur (R₁, R₂, .., Rₙ) d'un accès à une seule desdites deux copies chiffrées,
fournissant ainsi à chaque récepteur (R₁, R₂, ..., Rₙ) un flux unique de données obtenues (S) comprenant des paquets de données possédant des premier et deuxième filigranes (w₀, w₁), l'ordre dans lequel les premier et deuxième filigranes (w₀, w₁) sont présents dans le flux obtenu donnant le filigrane unique,
**caractérisé en ce**
**que** le procédé comprend par ailleurs l'étape de la fourniture du flux de données (S) avec une capacité multibits dans une seule couche pour stocker les informations supplémentaires.

2. Procédé selon la revendication 1, dans lequel les informations supplémentaires sont des informations globales.

3. Procédé selon la revendication 2, dans lequel les informations supplémentaires sont au moins une information de copyright, une information de producteur et une information de propriétaire.

4. Procédé selon la revendication 1, dans lequel la source (1) et les récepteurs (R₁, R₂, ..., Rₙ) sont reliés au moyen d'un réseau de distribution (2) tel qu'Internet.

5. Procédé selon la revendication 1, dans lequel la copie (V₀[i], V₁[i]) à laquelle le récepteur (1) a accès est déterminée par une séquence de codes de chiffrement aléatoires (SK[1], SK[2], ..., SK[2k]) qui sont envoyés avant la transmission.

6. Procédé selon la revendication 5 dans lequel les codes (SK[1], SK[2], ..., SK[2k]) sont générés avant la transmission par la source (1) et enregistrés dans des fichiers.

7. Procédé selon la revendication 1, dans lequel les filigranes qui sont générés changent au fil du temps tant qu'ils ne sont pas identiques et la source garde leur trace.

8. Procédé selon la revendication 1, dans lequel les filigranes qui sont générés sont plus de deux.

9. Procédé selon la revendication 1, dans lequel une chaîne d'identité est également dérivée par la source des deux codes donnés au récepteur et le flux en résultant est généré.

10. Procédé selon la revendication 1, dans lequel l'usage de la largeur de bande est réduit par des optimisations, par exemple en ne filigranant pas tous les paquets, par exemple en filigranant au moins dix minutes d'un film.

11. Source (1) de transmission de données multimédia vers des récepteurs (R₁, R₂, ..., Rₙ) d'une transmission à multi-diffusion, ladite source comprenant des moyens opérationnels (10) composés par ailleurs de moyens de transmission et de chiffrement (20) qui comptent des moyens de traitement pour :
- lire le paquet de données i P[i],
- créer au moins deux copies filigranées V₀[i], V₁[i] du paquet de données i,
- recevoir deux codes de chiffrement SK[2i-1] et SK[2i],
- chiffrer les copies filigranées V₀[i], V₁[i] du paquet de données i C₀[i]=E(V₀[i], SK[2i-1]) et C₁[i]=E(V₁[i], SK[2i]),
- transmettre C₀[i] et C₁[i] avec i, i=1, 2, ..., k, par le biais d'un réseau vers les récepteurs (R₁, R₂, ..., Rₙ),
**caractérisée en ce**
**que** lesdits moyens de transmission et de chiffrement (20) comprennent par ailleurs des moyens de traitement pour fournir aux paquets de données une capacité multibits dans une seule couche pour stocker des informations supplémentaires.

12. Source selon la revendication 11 dans laquelle les moyens opérationnels (10), les moyens de transmission et les moyens de chiffrement (20) sont implémentés comme un logiciel.

13. Récepteur de réception de données multimédia comprenant des moyens de réception et de déchiffrement (30) qui comprennent des moyens de traitement qui :
reçoivent au moins deux paquets de données C₀[i] et C₁[i],
obtiennent le code de déchiffrement pour le paquet de données i : RKr[i],
essaient de déchiffrer les deux paquets de données avec le code RKr[i],
reçoivent des informations supplémentaires ayant été stockées dans une capacité multibits dans une seule couche desdits paquets de données,
auquel cas un seul paquet de données déchiffrera dans un paquet de données adéquat : Vji[i]=D(Cj[i], RKr[i]), ji ε {0, 1},
décodent et rendent Vji[i].

14. Système comprenant une source (1), des récepteurs (R₁, R₂, ..., Rₙ) et un réseau de distribution d'intervention (2) pour réaliser un procédé de génération d'un filigrane unique pour un récepteur (R₁, R₂, ..., Rₙ) d'une transmission à multi-diffusion de données multimédia sous la forme de paquets de données, ledit système comprenant des moyens de traitement pour :
- la transmission à partir d'une source (1) d'au moins deux copies différentes (V₀[i], V₁[i]) de chaque paquet de données (P[1], P[2], ..., P[k]) ayant différents filigranes, un premier filigrane (w₀) et un deuxième filigrane (w₁), respectivement,
- le chiffrement desdites copies différemment, de préférence au moyen de différents codes de chiffrement SK[1], SK[2], ... SK[2k],
- la fourniture à chaque récepteur (R₁, R₂, .., Rₙ) d'un accès à une seule desdites deux copies chiffrées (V₀[i], V₁[i]),
fournissant ainsi à chaque récepteur un flux unique de données en résultant (S) comprenant des paquets de données possédant des premier et deuxième filigranes, l'ordre dans lequel les premier et deuxième filigranes (w₀, w₁) sont présents dans le flux obtenu (S) donnant le filigrane unique,
**caractérisé en ce**
**que** ledit système comprend par ailleurs des moyens de traitement pour la fourniture du flux de données (S) avec une capacité multibits dans une seule couche pour stocker les informations supplémentaires.

15. Système selon la revendication 14, dans lequel la source est un serveur et les récepteurs sont des clients.
